# EUROPEAN PATENT SPECIFICATION

(11) **EP 1 479 127 B1**
(45) Date of publication and mention of the grant of the patent: **26.07.2006**
(21) Application number: 02799272.6
(22) Date of filing: 19.12.2002
(51) Int. Cl.: H01M 10/50

(54) **TEMPERATURE CONTROL APPARATUS AND METHOD FOR HIGH ENERGY ELECTROCHEMICAL CELLS**
VORRICHTUNG UND VERFAHREN ZUR TEMPERATURKONTROLLE BEI ELEKTROCHEMISCHEN ZELLEN MIT HOHER ENERGIEDICHTE
PROCEDE ET APPAREIL DE REGULATION DE TEMPERATURE DESTINE A DES CELLULES ELECTROCHIMIQUES A ENERGIE ELEVEE

(30) Priority: 19.02.2002 US 357874 P
(43) Date of publication of application: 24.11.2004
(73) Proprietor: 3M Innovative Properties Company, St. Paul, MN 55133-3427 (US)
(72) Inventor: NG, Chin-Yee, 1255 Ferndale Street North, Maplewood, MN 55119 (US); GULLICKS, Scott D., Apple Valley, MN 55124 (US)
(74) Representative: Vossius & Partner
(86) International application number: PCT/US2002/040971
(87) International publication number: WO 2003/071616

(56) References cited:
- EP-A- 1 033 772
- WO-A-02/27816
- DE-A- 19 503 085
- DE-C- 19 849 491
- PATENT ABSTRACTS OF JAPAN vol. 1995, no. 06, 31 July 1995 (1995-07-31) & JP 07 073908 A (NIPPONDENSO CO LTD), 17 March 1995 (1995-03-17)

## Description

### Field Of The Invention

The present invention relates generally to energy storage devices and, more particularly, to apparatuses and methods for controlling the temperature of high energy electrochemical cells during operation.

### Background Of The Invention

The demand for new and improved electro-mechanical systems, such as hybrid-electric vehicles for example, has placed increased pressure on the manufacturers of energy storing devices to develop battery technologies that provide for high energy generation in a low-volume package. A number of advanced battery technologies have recently been developed, such as metal hydride (e.g., Ni-MH), lithium-ion, and lithium polymer cell technologies, which would appear to provide the requisite level of energy production and safety margins for many commercial and consumer applications. Such advanced battery technologies, however, typically exhibit characteristics that provide challenges for the manufacturers of advanced energy storage devices.

For example, advanced power generating systems typically produce a significant amount of heat which, if not properly dissipated, can result in non-optimal performance of the system. Moreover, poor thermal management of such cells can result in a thermal runaway condition and eventual destruction of the cells. The thermal characteristics of an advanced battery cell must therefore be understood and appropriately considered when designing a battery system suitable for use in commercial and consumer devices and systems.

A conventional approach of providing a heat transfer mechanism external to a stack of advanced rechargeable electrochemical cells of an energy storage system, for example, may be inadequate to effectively dissipate heat from internal portions of the cell. Such conventional approaches may also be too expensive or bulky in certain applications. The severity of consequences resulting from non-optimal performance, short-circuits, and thermal run-away conditions increases significantly when advanced high-energy electrochemical cells are implicated.

Another conventional cooling approach involves immersing the entire electrochemical cell or portions of the electrochemical cell in the coolant. While this approach provides good thermal contact between the electrochemical cell and the coolant stream, sealing and electrical isolation issues are of considerable concern.

Other characteristics of advanced battery technologies provide additional challenges for the designers of advanced energy storage devices. For example, certain advanced cell structures are subject to cyclical changes in volume as a consequence of variations in the state of charge of the cell. The total volume of such a cell may vary as much as five to six percent or more during charge and discharge cycling. Such repetitive changes in the physical size of a cell significantly complicates the thermal management strategy of the energy storage system.

Conventional battery systems, such as those that utilize lead acid cells for example, typically employ a cooling system that is implemented within the walls of the rigid battery casing, such as by use of cooling tubes within the walls of the casing. Other conventional approaches employ a cooling apparatus that contacts the external rigid metallic casing of the cells of the battery system. In such cases, the cooling system can be relatively simple in design, in that any dimensional changes occurring within the cells have little to no consequences externally of the cells. For example, a change in electrode volume during

DE 19849491 relates to an electrochemical energy storage unit having several feed and return channels connected by heat exchange channels through which heat exchange medium passes in alternate directions. An electrochemical energy storage unit comprises one or more rows of adjacent storage cells associated with a heat exchange structure which has several feed and return channels arranged on its opposite sides and connected by heat exchange channels. Each heat exchange channel extends once across the storage cell arrangement and heat exchange medium passes through the heat exchange channels in alternate directions.

JP-A-07-073908 relates to a heat exchanger which is composed of plural batteries, a housing case having the housing chambers of the batteries, and heat-exchanging bags arranged in the middle to pass heat-exchanging fluid. The bags in the respective housing chambers are linked with each other by communication parts arranged in the grooves in the case, and the heat exchanging fluid flows through the respective bags. The heat-exchanging fluid is closely contacted with the battery and the case due to the internal pressure of the fluid to improve heat-exchanging efficiency.

W00227816 relates to a multi-cell monoblock battery in which a plurality of electrochemical cells are disposed in a battery case. The battery case includes one or more cell partitions which divide the interior of the case into a plurality of cell compartments that house the electrochemical cells. Preferably, one or more coolant channels are integrally formed with at least one of the cell partitions. The coolant channels may have inlets and outlets disposed in the walls of the battery case so as to provide a cross-flow cooling design.

DE19503085 describes a battery module with several electrochemical storage accumulators (cells) and with the cells having electrically insulating units acting also as channels for a temperature control liquid, the unit is formed as a pouch, with internal temperature control units for a liquid coolant, closed hermetically from the inlet and outlet operation of such hard encased cells does not result in an appreciable change of the casing dimensions of the cells, due to the rigidity and strength of the cells' casing. In applications employing advanced rechargeable electrochemical cells (in particular Lithium Ion, Lithium Polymer, Lithium Ion Polymer cells, for example) not constrained by integral rigid cell casings, the cooling approaches and methodologies used in connection with conventional battery systems are of limited practical use due to large scale net external dimensional changes on the casing occurring over charge and discharge cycles.

There is a need in the advanced battery manufacturing industry for a power generating system that exhibits high-energy output, and one that provides for safe and reliable use in a wide range of applications. There exists a further need for a thermal management approach that effectively maintains energy storage cells at a nominal operating temperature and provides for optimal performance of such cells. The present invention fulfills these and other needs.

### Summary Of The Invention

The present invention is directed to an apparatus and method of cooling electrochemical cells of an energy storage device according to claims 1 and 6.

The cooling bladder is fabricated to include a continuous hollowed interior within which the heat transfer medium passes. In one configuration, the cooling bladder includes a number of flow channels within which the heat transfer medium passes.

According to one configuration, the cooling bladder includes a support arrangement that inhibits restriction of beat transfer medium flow at cooling bladder bend locations. The support arrangement can be located on an outer surface of the cooling bladder at cooling bladder bend locations. The support arrangement can also be located within the cooling bladder at cooling bladder bend locations. The support arrangement can further be integrated within the cooling bladder construction at cooling bladder bend locations.

For example, the cooling bladder may include a porous filler material disposed within the cooling bladder. The porous filler material can be disposed at cooling bladder locations subject to bending. In another approach, the cooling bladder includes thickened sections provided at cooling bladder locations subject to bending.

The cooling bladder can be designed to include an interior compartment within which the heat transfer medium passes between the inlet port and the outlet port in a unidirectional manner. The cooling bladder can also be designed to include a number of compartments through which the heat transfer medium passes. For example, the cooling bladder can include a first interior compartment and a second interior compartment. The transfer medium passing within the first interior compartment preferably flows in a direction opposing that of the transfer medium passing within the second interior compartment.

The cooling bladder is constructed from a conformable thermally conductive material having a single material layer or from a conformable thermally conductive material having a number of material layers. For example, the conformable thermally conductive material can include a metallic layer disposed between a first polymer layer and a second polymer layer.

The cooling bladder's conformable thermally conductive material preferably has a thickness of less than about 3.8 mm (150 mils). Advantageously, the cooling bladder and the heat transfer medium preferably constitute less than about 50 % by weight or volume of a total aggregate weight or volume of the cells, cooling bladder, and heat transfer medium.

The electrochemical cells of the energy storage device can be arranged to form a number of cell stacks or sets. Each of the cell sets is provided with one of a number of cooling bladders, such that an operating temperature of electrochemical cells of each of the cell sets is controlled by at least one of the cooling bladders deployed in the energy storage device.

The electrochemical cells of an energy storage device can be arranged to form a cell stack. In such a configuration, the cooling bladder controls the operating temperature of the cell stack such that a temperature difference as measured between any two cells of the cell stack does not exceed 5 degrees Celsius. The cooling bladder can also control the operating temperature of the cell stack such that a temperature difference as measured between any two points on either the first or second planar surface of an individual cell does not exceed 5 degrees Celsius. More preferably, the cooling bladder controls the operating temperature of the cell stack such that a temperature difference as measured between any two cells of the cell stack or between any two points on either the first or second planar surface of an individual cell does not exceed 2 degrees Celsius.

The cooling bladder conforms to a serpentine configuration to contact the respective first and second planar surfaces of each of the electrochemical cells of an energy storage device. By way of example, each of the electrochemical cells includes first, second, third, and fourth edges, such that the first edge opposes the second edge and the third edge opposes the fourth edge. The first and second edges of each electrochemical cell electrically couples to respective electrical conductors for conducting current into and out of each of the electrochemical cells. The cooling bladder contacts respective third and fourth edges and respective first and second planar surfaces of each of the electrochemical cells.

The heat transfer medium passed through the cooling bladder can be water, according to one approach. The heat transfer medium can also be a mixture of water and ethylene glycol or other anti-freeze, or a mixture of methanol and ethylene glycol. The temperature of the heat transfer medium entering the inlet port of the cooling bladder is preferably substantially constant.

The cooling bladder preferably controls the operating temperature of electrochemical cells of an energy storage device having operating temperatures ranging between about 20 degrees Celsius and about 130 degrees Celsius. The electrochemical cells can be lithium cells or nickel metal hydride cells, for example.

According to a further embodiment, the energy storage device includes a housing within which the electrochemical cells and the cooling bladder are situated. The housing includes a positive terminal and a negative terminal each coupled to the electrochemical cells. The housing further includes an inlet aperture for providing access to the inlet port of the cooling bladder and an outlet aperture for providing access to the outlet port of the cooling bladder.

In one configuration, the housing contains the electrochemical cells and a number of cooling bladders. In addition to including a positive terminal and a negative terminal each coupled to the electrochemical cells, the housing further includes at least one inlet aperture for providing access to an inlet port of each of the cooling bladders and at least one outlet aperture for providing access to an outlet port of each of the cooling bladders. The number of cooling bladders and inlet and outlet ports may be selected to provide for various configurations of single, multiple, serial, and parallel flows, and combinations of such flows.

In accordance with another embodiment of the present invention, the cooling bladder is pressurized to maintain the electrochemical cells of the energy storage device in a state of compression during charge and discharge cycling.

The above summary of the present invention is not intended to describe each embodiment or every implementation of the present invention. Advantages and attainments, together with a more complete understanding of the invention, will become apparent and appreciated by referring to the following detailed description and claims taken in conjunction with the accompanying drawings.

### Brief Description Of The Drawings

Figure 1 is an illustration of an energy storing system which employs a cooling apparatus according to an embodiment of the present invention;
Figure 2 is an illustration of an energy storing system which employs a cooling apparatus according to another embodiment of the present invention;
Figure 3 illustrates a sub-assembly of the energy storing system of Figure 2, with a more detailed showing of a cooling bladder of the present invention;
Figure 4 is an illustration of a cooling bladder that employs top-mounted inlet and outlet ports according to an embodiment of the present invention;
Figure 5 is an illustration of a cooling bladder that employs side-mounted inlet and outlet ports according to an embodiment of the present invention;
Figure 6 is a detailed illustration of a cooling bladder according to an embodiment of the present invention;
Figure 7 is a side view of the cooling bladder depicted in Figure 6;
Figure 8 illustrates a cooling bladder configuration according to an embodiment of the present invention;
Figure 9 illustrates a cooling bladder configuration according to another embodiment of the present invention;
Figure 10 illustrates a cooling bladder configuration according to a further embodiment of the present invention;
Figure 11 is an illustation of a string of electrochemical cells fitted with a cooling bladder in accordance with an embodiment of the present invention;
Figure 12 is an illustation of a string of electrochemical cells fitted with multiple cooling bladders not forming part of the present invention; and
Figure 13 is an illustration of a simple parallel flow arrangement implemented within a cooling bladder of the present invention.

While the invention is amenable to various modifications and alternative forms, specifics thereof have been shown by way of example in the drawings and will be described in detail. It is to be understood, however, that the intention is not to limit the invention to the particular embodiments described. On the contrary, the intention is to cover all modifications, equivalents, and alternatives falling within the scope of the invention as defined by the appended claims.

### Detailed Description Of Various Embodiments

In the following description of the illustrated embodiments, reference is made to the accompanying drawings which form a part hereof, and in which is shown by way of illustration, various embodiments in which the invention may be practiced. It is to be understood that the embodiments may be utilized and structural changes may be made without departing from the scope of the present invention.

A temperature control apparatus and methodology of the present invention provides for enhanced control of energy storage device temperatures during normal and cold start operations. A temperature control apparatus and methodology according to the present invention is particularly well-suited for controlling the temperature of high energy, high power density rechargeable electrochemical cells arranged in a spaced apart relationship, such as an arrangement of lithium or nickel metal hydride prismatic cells defining a rechargeable module or battery, for example. Such rechargeable electrochemical cells are particularly well-suited for use in the construction of high current, high voltage energy storage modules and batteries, such as those used to power electric and hybrid-electric vehicles, for example.

Advanced rechargeable lithium and nickel metal hydride electrochemical cells, for example, are subject to significant volumetric changes during charge and discharge cycling due to anode state changes, which renders conventional cooling approaches ineffectual or inadequate. Also, such advanced rechargeable batteries generally require maintenance of uniform stack and cell pressures. In conventional implementations, this is typically accomplished via a pressure system internal or external to the individual cells, such as a system of springs, plates or pads.

Intimate contact between an arrangement of electrochemical cells and a temperature control apparatus of the present invention is advantageously maintained in the presence of significant cell expansion and contraction, which provides for enhanced temperature control, improved cell performance, and extended cell life. In energy storage device applications in which compressive pressure within a cell arrangement (e.g., a cell stack arrangement or a cluster arrangement) is needed or desired, the requisite cell stack pressure can be maintained during cell expansion and contraction by pressurizing the temperature control apparatus of the present invention. In such applications, a temperature control apparatus of the present invention advantageously provides the requisite thermal and pressure control for an arrangement of electrochemical cells, thereby obviating the need for separate temperature and pressure control systems.

In broad and general terms, a temperature control bladder or pouch of the present invention (referred to herein as a cooling bladder, although cooling/heating bladder is equally applicable) is formed of a deformable, thermally conductive material through which a heat transfer medium passes. The cooling bladder can be readily manipulated during installation within a given cell stack arrangement, such that contact between surface of the cell adjacent the cells' active area and the cooling bladder is maximized. The deformable cooling bladder may be formed to take on a variety of shapes, sizes, and lengths to accommodate a wide variety of cell stack geometries. The cooling bladder for a given cell stack arrangement takes on a continuous serpentine shape.

The cooling bladder of the present invention may have a single interior compartment within which the heat transfer medium is contained or a multiplicity of such interior compartments. The cooling bladder may be provided with a single inlet port and a single outlet port, in the case of a serial flow arrangement, or may have multiple inlet ports and multiple outlet ports, in the case of a parallel flow arrangement or an arrangement involving a multiplicity of serial or parallel flows. Single inlet-multiple outlet port configurations can also be employed, as can multiple inlet-single outlet port arrangements.

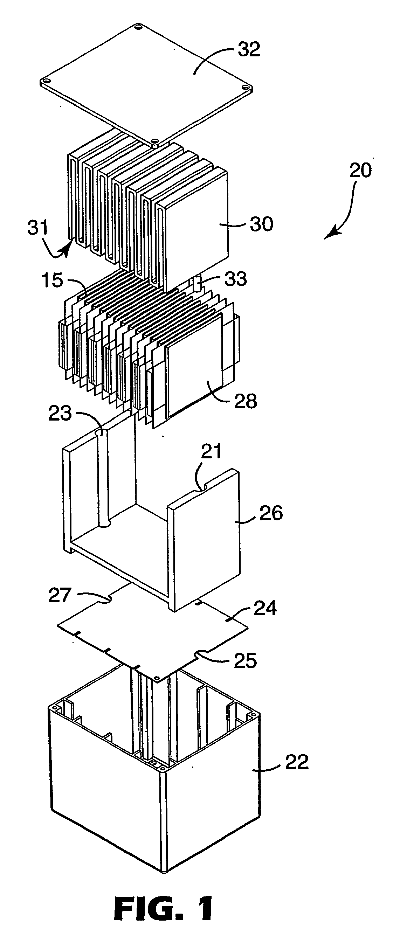

Referring now to the figures, and more particularly to Fig. 1, there is illustrated an embodiment of an energy storage device 20 which employs a temperature control apparatus and methodology in accordance with the principles of the present invention. According to this embodiment, the energy storage device 20 includes a housing body 22 into which a circuit board 24 is mounted. The circuit board 24 includes positive and negative contacts that are electrically coupled to respective positive and negative terminals attached to or extending through a side or sides of the housing body 22.

A foam insert 26 is positioned adjacent the circuit board 24. A cell stack assembly 28 is fitted within the foam insert 26. The cell stack assembly 28 comprises a number of rechargeable electrochemical cells 15. The electrochemical cells 15 are preferably of an advanced rechargeable technology and exhibit high energy and high power density attributes. In this configuration, the cell stack assembly 28 includes electrical contacts which extend to connect with receiving contacts (not shown) provided on the circuit board 24. The connections between the cell stack assembly 28 and the circuit board 24 can be designed to provide desired parallel and series connections between cells 15 of the cell stack assembly 28 to achieve a desired voltage and amperage for the energy storage device 20.

Figure 1 further illustrates a cooling bladder 30 in accordance with an embodiment of the present invention. The cooling bladder 30 depicted in Fig. 1 has been manipulated in this illustrations to have a generally serpentine shape to accommodate the configuration of the cell stack assembly 28. The serpentine configuration of the cooling bladder 30 provides for easy integration within the spaced apart cells 15 of the cell stack assembly 28. The "fan fold" cooling bladder configuration depicted in Fig. 1 allows portions of the cooling bladder 30 to be interleaved within the cell stack assembly 28, such that substantially all of the surface area of each cell is in contact with the cooling bladder 30.

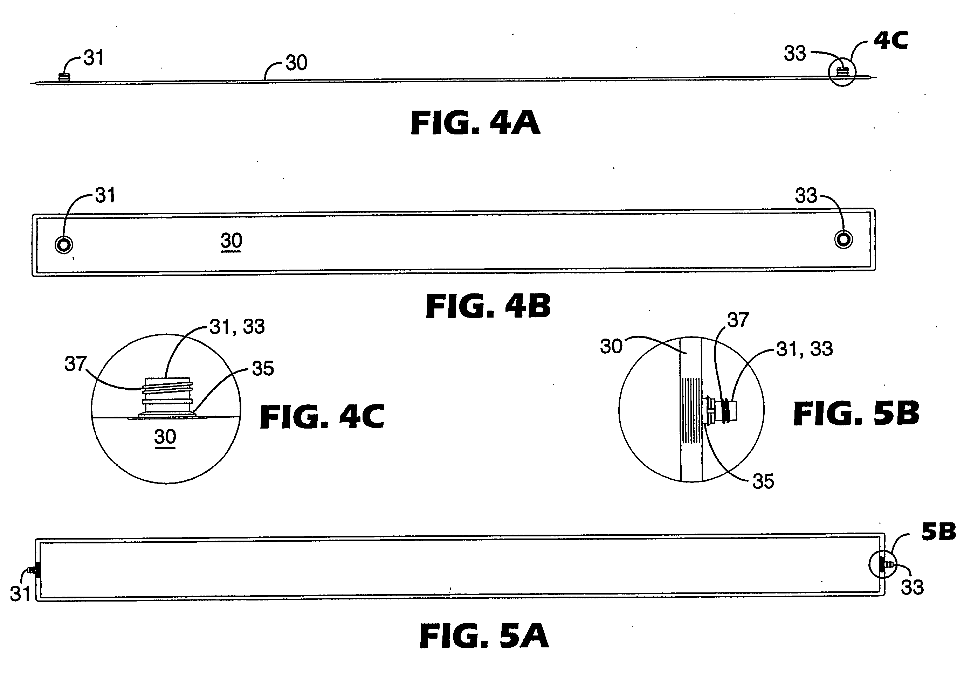

The cooling bladder includes an inlet port 31 (not shown in Fig. 1, but shown in Figs. 4 and 5) and an outlet port 33. As shown, the outlet port 33 and inlet port 31 are tubular in shape, and respectively terminate at opposing ends of the cooling bladder 30. The foam insert 26 includes corresponding semicircular channels 21 and 23 that accommodate the outlet port 33 and inlet port 31 when the cell stack assembly 28 and cooling bladder 30 are properly installed in the foam insert 26. The circuit board 24 also includes semicircular notches 25 and 27 that respectively accommodate the outlet port 33 and inlet port 31 of the cooling bladder 30.

The outlet port 33 and inlet port 31 of the cooling bladder 30 extend through corresponding apertures (not shown) in the housing body 22. Alternatively, tubes or hoses extend through respective apertures in the housing body 22 and are connected to the outlet port 33 and inlet port 31 of the cooling bladder 30. After completing installation of the cell stack assembly 28 and cooling bladder 30 within the housing body 22, a housing lid 32 is secured to housing body 22. Hermetic or non-hermetic seals may used as required.

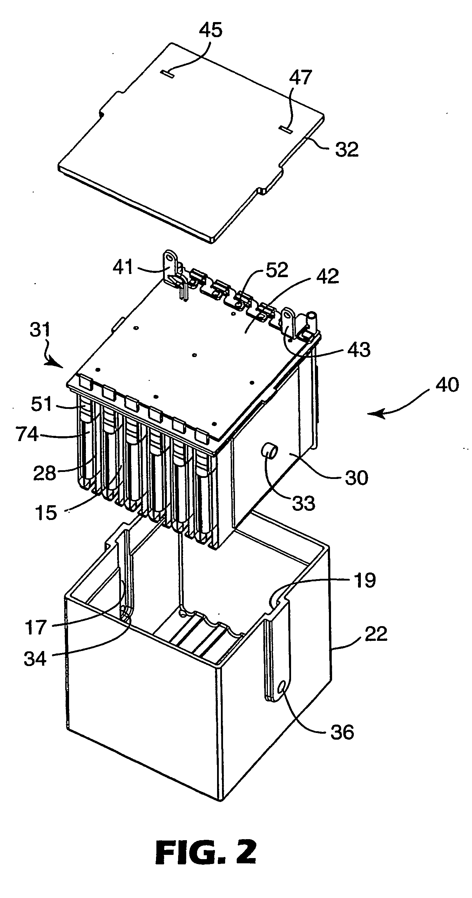

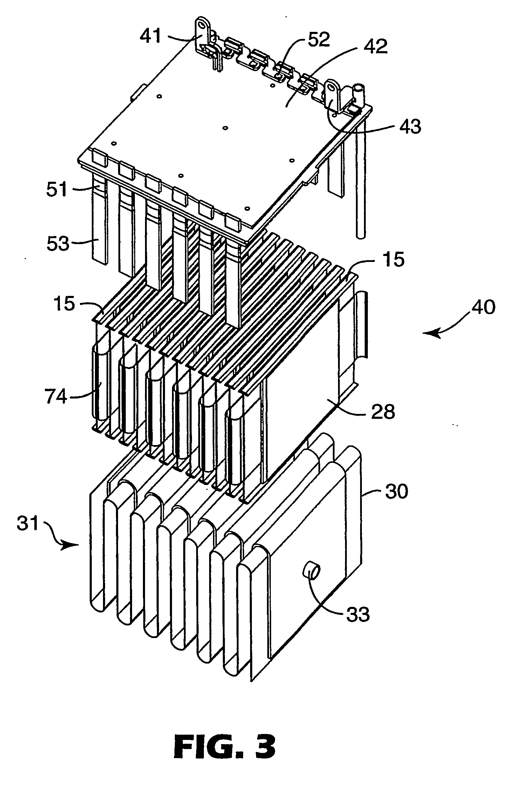

Figures 2 and 3 illustrate an alternative embodiment of an energy storage device 40. According to this embodiment, electrical connections between the energy storage device 40 and an external electrical system are established through the housing lid 32, rather than through the housing body 22 as in the case of the embodiment depicted in Fig. 1. The energy storage device 40 illustrated in Figs. 2 and 3 includes a cooling bladder 30 of the present invention installed on a cell stack assembly 28 defined by a number of spaced apart electrochemical cells 15. In this configuration, the cooling bladder 30 is shown to include an outlet port 33 and inlet port 31 (not shown in Figs. 2 and 3, but shown in Figs. 4 and 5) that respectively terminate on the planar surface of the cooling bladder 30 near the opposing ends of the cooling bladder 30. As such, the outlet port 33 and inlet port 31 are arranged on the cooling bladder 30 to provide for side access through adjacent side walls of the housing body 22.

The housing body 22 is fabricated to include channels 19 and 17 that respectively accommodate outlet and ports 33 and 31 as the cell stack assembly 28 and cooling bladder 30 are installed into the housing body 22. An outlet aperture 36 and an inlet aperture 34 are provided in side walls of the housing body 22 to permit external connection to respective outlet and inlet conduits. When the cell stack assembly 28 and cooling bladder 30 are properly installed in the housing body 22, the outlet and inlet ports 33, 31 register with the outlet and inlet apertures 36, 34 of the housing body 22. Outlet and inlet conduits, such as hoses or the like, may subsequently be connected to the outlet and inlet ports 33,31. The inlet conduit provides a source supply of a heat transfer medium to the inlet port 31 of the cooling bladder 30, and the outlet conduit connected to the outlet port 33 provides a return path for the heat transfer medium after having passed through the cooling bladder 30.

According to this embodiment, the circuit board 42 is positioned on top of the cell stack assembly 28 adjacent the housing lid 32. The circuit board 42 includes a number of leads 51 to which a corresponding number of tabs 53 are attached. The tabs 53 extend from the leads 51 of the circuit board 42 and connect with tabs 74 of the cells 15 of the cell stack assembly 28. In a typical configuration, one of the circuit board tabs 53 provides electrical connection to one of the cell tabs 74. The cell leads 51 are preferably fabricated as copper bars and include a swaged flexible (e.g., braided) mid-section. The cell tabs 53 are preferably ultrasonically welded to the cell leads 51. The circuit board 42 may further include various electrical and/or electronic circuits 52, such as bypass circuitry, equalization circuitry, fuses, and the like.

In the embodiment depicted in Figs. 2 and 3, positive and negative terminals 41 and 43 are electrically connected to the leads 51 of the circuit board 42, typically through electrical/electronic circuitry 52. The terminals 41 and 43 respectively register with apertures 45 and 47 of the housing lid 32. As such, external electrical connections with the energy storage device 40 are established through the top housing lid 32 of the energy storage device 40. The terminal apertures 45, 47 and the housing lid 32 may include hemietic or non-hermetic seals as a particular application may require.

The cells 15 of one or a number of the energy storage devices 40 can be electrically connected to define an energy storage device which produces a desired voltage and current appropriate for a given application. For example, a number of electrochemical cells 15 can be arranged in a stack configuration and interconnected to form larger power producing devices, such as modules and batteries for example. A grouping of electrochemical cells 15 may be selectively interconnected in a parallel and/or series relationship to achieve a desired voltage and current rating. For example, a number of electrochemical cells 15 may be grouped together and connected in parallel to common positive and negative power buses or terminals of the circuit board 42 to form a cell stack assembly 28. A number of such cell stack assemblies 28 may then be connected in series to form a module. Further, a number of individual modules may be connected in series to constitute a battery. Such an arrangement of modules can be used to power an electric or hybrid-electric vehicle, for example.

The electrochemical cells 15 employed in the cell stack assembly 28 are preferably advanced rechargeable (e.g., secondary) high energy and high power density batteries, such as lithium batteries and nickel metal hydride batteries. These batteries, when used in a multi-cell configuration with high discharge rates, typically generate a significant amount of heat, which can result in thermal runaway, short circuiting, and eventual destruction of the batteries if not properly controlled.

Lithium batteries which can advantageously be employed in an energy storage device incorporating a cooling apparatus and methodology of the present invention include rechargeable lithium ion, lithium polymer, and lithium ion polymer ("gel") batteries. Lithium ion batteries generally use carbon as the anode material, liquid electrolytes, such as mixtures of propylene carbonate, ethylene carbonate, and diethyl carbonate, and metal oxides, such as lithium cobalt oxide or lithium manganese oxide, as the positive active material. The anode active materials may also consist of alloys that alloy with lithium, such as tin, aluminum, and silicon, for example.

Lithium polymer batteries employ a solid polymer electrolyte as an alternative to the liquid electrolytes of lithium ion batteries. These batteries have lower ionic conductivities as compared to lithium ion batteries and are thus usually operated at temperatures above ambient, such as 60-100°C. Lithium polymer batteries also offer advantages of a "non-liquid" battery and flexibility of configuration. The anodes of such batteries are lithium metal, electrolytes are typically crosslinked copolymers of polyethylenoxide, and cathodes are metal oxides, such as lithium vanadium oxide.

Lithium ion polymer gel batteries exhibit improved conductivity as compared with lithium polymer batteries by incorporating a plasticizer, such as propylene carbonate, into the solid polymer matrix. Lithium ion polymer gel batteries may be viewed as hybrids between the lithium ion and solid polymer batteries.

Nickel metal hydride batteries use hydrogen absorbed in a metal alloy in the form of a hydride for the active negative material. These alloys are typically rare earth (e.g., Misch metal) based on lanthanum nickel or alloys based on titanium zirconium. The active material of the positive electrode is nickel oxyhydroxide. The electrolyte is aqueous potassium hydroxide.

The electrochemical cells 15 employed in the cell stack assembly 28 depicted in the drawings are typically prismatic in configuration. The cells 15 generally have two opposing planar surfaces that account for most of the cell's surface area relative to edges of the cells. For example, a typical cell 15 may be fabricated to have a length of approximately 160 mm, a height of approximately 125 mm, and a thickness of only 9 mm. Another set of useful cell dimensions, includes a surface area of about 12.7 cm (5 inches) by 12.7 cm (5 inches) and a thickness of about 0.84 cm (0.33 inches).

Maintaining uniform temperature of the cell stack assembly 28 and individual cells 15 is critical in preventing premature failure of the cell stack assembly 28. A typical string of cells constituting a given cell stack assembly 28 may, for example, include between 48 and 72 serially electrically connected cells 15. It is readily appreciated by those skilled in the art that premature failure of any one of the cells 15 of a string of cells will render the entire cell string either inoperative or unacceptable in terms of energy output.

In the case of a cell stack assembly 28 comprising a string of lithium ion cells 15 employed in a given energy storage device, for example, the temperature control apparatus of the energy storage device must maintain the cells 15 at a uniform temperature during charge and discharge cycles to provide for optimal cell performance. By way of example, the temperature control apparatus must control the operating temperature of the cell stack assembly 28 such that a temperature difference as measured between any two cells of the cell stack or between any two points on either one of the opposing planar surfaces of an individual cell does not exceed 5 degrees Celsius. More preferably, a temperature difference as measured between any two cells of the cell stack or between any two points on either one of the opposing planar surfaces of an individual cell should not exceed 2 degrees Celsius.

With regard to maintenance of the operating temperature of the cell stack assembly 28, a temperature difference as measured between any two points on either one of the opposing planar surface of an individual cell or between any two cells of the cell stack assembly 28 should not exceed 5 degrees Celsius. More preferably, a temperature difference as measured between any two points on either one of the opposing planar surface of an individual cell or between any two cells of the cell stack assembly 28 should not exceed 2 degrees Celsius.

A factor that further complicates the effort to provide effective temperature control of advanced rechargeable batteries concerns cyclical changes in cell volume that occur in various types of such batteries. By way of example, the volume of a lithium polymer electrochemical cell of the type described previously varies during charge and discharge cycling due to the migration of lithium ions into and out of the lattice structure of the anode and cathode material. This migration creates a corresponding increase and decrease in total cell volume on the order of approximately five to six percent during charging and discharging, respectively. Other types of advanced rechargeable batteries (e.g., lithium ion, lithium ion polymer, and nickel metal hydride) likewise exhibit significant increases and decrease in total cell volume during charge and discharge cycling.

It is understood that the performance and service-life of an electrochemical cell that undergoes repeated cycles of expansion and contraction is significantly increased by maintaining the layers/components of the cell in a state of compression. Improved cell performance may be realized by maintaining pressure on the two larger opposing surfaces of the cell during cell charge and discharge cycling. It is considered desirable that the compressive forces exerted on the cells be distributed fairly uniformly over the surface of application.

A cooling apparatus and methodology of the present invention provides the requisite level of temperature control needed to maximize the performance of advanced rechargeable cells and strings/stacks of such cells. Moreover, a cooling apparatus and methodology of the present invention provides the requisite level of pressure control as the cells undergo net external volumetric changes during operation. For example, the cooling apparatus can produce pressures ranging between about 34 kPa (5 psi) and about 414 kPa (60 psi) as needed in a given application, it being understood that lower or higher pressures can be achieved if needed or desired. A cooling apparatus and methodology of the present invention provides a mechanism to maintain good thermal contact with the cells of the string/stack continuously and in the presence of significant cell volume changes during operation.

Returning to the figures, and more particularly to Fgs. 4 and 5, there is illustrated two embodiments of a cooling apparatus well-suited for use with advanced rechargeable cells and batteries. The cooling bladder 30 is fabricated from a resilient material which is sealed along the periphery to form one or more hollowed interior compartments. External access to the interior compartment(s) is achieved through attachment to inlet and outlet ports 31, 33. The cooling bladder 30 may be fitted with a single pair or multiple pairs of inlet and outlet ports 31, 33 depending on the number of interior compartments provided in the cooling bladder 30 and the desired number and direction of flow pathways through the cooling bladder 30. As such, a cooling bladder 30 of the present invention may be configured to provide for one or more serial and/or parallel flow pathways through the cooling bladder 30.

In the configuration of a cooling bladder 30 shown in Figs. 4A and 4B, inlet and outlet ports 31, 33 are respectively situated near opposing ends of the cooling bladder 30 and are mounted on one of the two planar surfaces of the cooling bladder 30. Figure 4A provides a side view of one of such top-mounted configurations. It is noted that the inlet and outlet ports 31, 33 need not be mounted on the same planar surface of the cooling bladder 30 as is shown in Figs. 4A and 4B.

Figure 4C is a detailed illustration of the mounting configuration of inlet and outlet ports 31, 33 to the cooling bladder 30 according to a top-mounted arrangement. The inlet and outlet ports 31, 33 each include a threaded fitment or spout 37 which is mounted so that the fitment 37 penetrates one of the two planar surfaces of the cooling bladder 30. A seal 35 is provided where the fitment 37 is mated to the cooling bladder surface. The fitment 37 and seal 35 can be selected from commercially available components depending on the particular design of a given energy storage device that incorporates a cooling bladder 30 of the present invention.

Figure 5A illustrates another configuration of a cooling bladder 30 in which inlet and outlet ports 31, 33 are respectively situated at opposing ends of the cooling bladder 30. According to this side-mounted configuration, and as shown in the detailed depiction of Fig. 5B, inlet and outlet ports 31, 33 each include a threaded fitment 37 which is mounted so that the fitment 37 penetrates a side surface of the cooling bladder 30. A seal 35 is provided where the fitment 37 is mated to the cooling bladder surface. Ribbing may be incorporated to ensure a good seal between the fitment 37 and the cooling bladder surface. As in the configuration illustrated in Fig 4C, the fitment 37 and seal 35 shown in Fig. 5B can be selected from commercially available components depending on the particular design of a given energy storage device that incorporates a cooling bladder 30 of the present invention.

For purposes-of illustration and not of limitation, the cooling bladder 30 illustrated in Figs. 4 and 5 can be fabricated to have a length of several feet. For example, the length of the cooling bladder 30 can range between 1.5 and 3 m (5 and 10 feet) for many applications e.g. 2.1 m to 2.3 m (7 feet to 7.5 feet). The cooling bladder 30 can have a width of several inches. For example, the cooling bladder 30 can have a width ranging between 10.2 and 17.8 cm (4 and 7 inches). Generally, the width of the cooling bladder 30 is designed to accommodate the width of the electrochemical cells employed in a given energy storage device. The cooling bladder's conformable thermally conductive material 30 can have a thickness that ranges between about 0.152 cm and 3.8 mm (6 mils and 150 mils).

For example, an energy storage module may incorporate lithium ion prismatic cells having a width and height of about 12.7 cm (5 inches) and a thickness of about 0.84 cm (0.33 inches). An appropriate width of the cooling bladder 30 for such 12.7 cm x 12.7 cm (5" x 5") cells can range between 12.7 cm and 15.2 cm (5 inches and 6 inches), with 14 cm (5.5 inches) being a suitable width. The length of the cooling bladder 30 is dependent on a number of factors, including the number of cells used in a cell stack assembly, the tolerance for temperature variations across a cell and the cell stack, and the number of cell stack assemblies used in a given energy storage module, for example.

By way of example, a particular energy storage module may incorporate four cell stack assemblies each of which incorporates 12 electrochemical cells having dimensions of about 12.7 cm x 12.7 cm x 0.84 cm (5"x5"x0.33"). In such a configuration, one cooling bladder 30 can be employed to provide temperature control for a corresponding one of the four cell stack assemblies, for a total of four cooling bladders 30. Each of the cooling bladders 30 can have a length of about 218.4 cm (7 feet-2 inches), and a width of about 14 cm (5.5 inches).

One or more locations along the periphery of the cooling bladder 30 can be sealed to form the cooling bladder 30. For example, a 9.5 mm (3/8 inch) wide seal can be used at two peripheral locations along the sides of the cooling bladder 30 to provide sealing along the length of the cooling bladder 30. A 1.27 cm (½ inch) wide seal can be used at two peripheral locations along the ends of the cooling bladder 30 to provide sealing along the opposing ends of the cooling bladder 30.

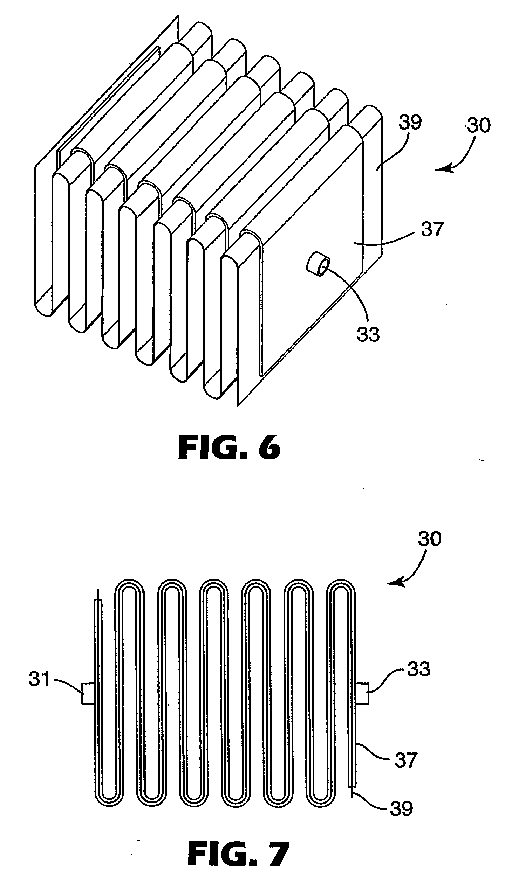

Figures 6 and 7 illustrate additional features of a cooling bladder 30 of the present invention. According to this illustration, the cooling bladder 30 includes an active region 37 and a sealed region 39. The active region 37 defines the unsealed portion of the cooling bladder 30 within which a heat transfer medium passes via inlet and outlet ports 31 and 33. The active region 37 thus represents the portion of the cooling bladder 30 that comes into thermal contact with the electrochemical cells and provides the requisite temperature control for the cells. As such, the width of the active region 37 of the cooling bladder 30 is designed to accommodate the width of the active region of the subject cells. The inactive sealed region 39 is shown to have a width that exceeds the width of the subject cells.

By way of example, and assuming use of 12.7 cm x 12.7 cm (5"x5") cells that have an active area of about 10.8 x 10.8 cm (4.25"x4.25") the active region 37 of the cooling bladder 30 can have a width of about 11 cm (4.33"). The sealed region 39 can extend beyond the active region 37 by about 4.6 cm (1.8"), such that the total width of the cooling bladder (width of active region 37 plus width of inactive region 39) is about 15.7 cm (6.2 inches) in this illustrative, non-limiting example.

The active region 37 of the cooling bladder is generally designed to manage a maximum allowable amount of heat that is generated by a grouping of electrochemical cells during operation. The maximum allowable heat limit typically takes into account the excess heat generated during a short circuit event within a cell string, and also varies depending on the availability of bypass circuitry or other short circuit control devices that limit the amount of heat generated by a short circuited cell or cells. For example, a string of 12 cells may require that the cooling bladder 30 manage 18 W of heat dissipation per cell during normal operation. In this illustrative example, the cooling bladder 30 is to be designed to manage about 220 watts (i.e., Q = 220 W) of heat dissipation from the string of 12 cells (12 cells x 18W/cell = 216 W).

The heat transfer medium passing through the cooling bladder 30 is typically water or a combination of an anti-freeze and water (e.g., a blend of water and ethylene glycol or a mixture of methanol and ethylene glycol). The rate of heat transfer medium flow through the cooling bladder 30 is dependent on the heat dissipation requirement of a given string of cells. For a cooling bladder 30 having dimensions discussed above with reference to Figs. 6 and 7 and a heat dissipation requirement of about 220 W and a maximum temperature difference of 2°C, flow rates of water through the cooling bladder 30 of about 0.06 kg/sec to about 0.07 kg/sec may be sufficient.

It is desirable that the temperature of the heat transfer medium supplied to the cooling bladder 30 be substantially constant. This desired requirement simplifies the design and performance requirements of the cooling bladder 30. In an implementation in which energy storage modules equipped with cooling bladders 30 of the present invention are deployed in an electric or hybrid-electric vehicle, the vehicle preferably includes a battery coolant circuit that supplies a heat transfer medium (i.e., coolant) to the cooling bladders 30 of each energy storage module at a substantially constant temperature. The battery coolant circuit may either be separate from or be connected to the vehicle's main coolant system. The coolant passed out of the energy storage modules typically returns to the battery coolant circuit or the main coolant system, depending on the design of the vehicle and its cooling system. The returned coolant is brought back to the predetermined supply temperature prior to being supplied to the energy storage modules.

It is understood that the design and implementation of an effective temperature control apparatus of the present invention depends on numerous factors unique to a given application. Such factors include, for example, cooling bladder dimensions and thermal conductance properties; heat transfer medium properties, flow rate, and entry temperature; energy storage device insulation and thermal environment of use, cell energy dissipation characteristics, and coolant system specifications (e.g., coolant supply temperature), among others.

In many applications, volume and weight limits are specified for the energy storing device to be used in a given application. For example, a given manufacturer of electric-hybrid vehicles may specify that the vehicle's battery cannot exceed a volume of 32 liters and a weight of 40 kilograms. In order to maximize the available volume and weight of the battery allotted to the energy producing components of the battery, it is highly desirable to minimize the volume and weight of the temperature control components of the battery.

A temperature control apparatus that employs a cooling bladder of the present invention advantageously maximizes temperature control performance for high energy, high power density batteries, while minimizing weight and volume requirements. For example, a cooling bladder of the present invention and the heat transfer medium passing through it constitute less than about 50% by weight or volume of a total aggregate weight or volume of the cells, cooling bladder, and heat transfer medium. Those skilled in the art will readily appreciate the advantages of low weight and volume overhead offered by a cooling apparatus of the present invention in comparison to conventional cooling approaches.

The material used in the fabrication of the cooling bladder 30 may be a single layer material or a multiple layer material. In the case of a single layer material, the cooling bladder 30 may be constructed using a resilient material having good thermal conduction properties, such as ELVAX (ethylene-vinyl acetate copolymer, DuPont, Wilmington, DE) or low density polyethylene (LDPE).

In the case of a multiple layer material, the cooling bladder 30 may be fabricated using a number of different multi-layer materials having good thermal conduction properties. The cooling bladder 30 may, for example, be fabricated using a three layer construction. According to one configuration, a metallic layer is disposed between a first polymer layer and a second polymer layer. By way of example, a thin metallic foil, such as aluminum foil, can be used to minimize the moisture vapor transmission rate (MVTR) over the life of the cooling bladder 30 and exhibits good conformability and thermal conductivity properties. A heat sealable film, such as polyethylene, is disposed on a first face of the metallic foil. A protective film, such a nylon or polypropylene, is disposed in a second face of the metallic foil. The three-layer material can be sealed using known sealing techniques to form the cooling bladder 30. According to another configuration, the cooling bladder 30 may be fabricated using a PET-metal material in contact with a layer of ethylene-vinyl acetate copolymer (e.g., ELVAX, manufactured by Dupont).

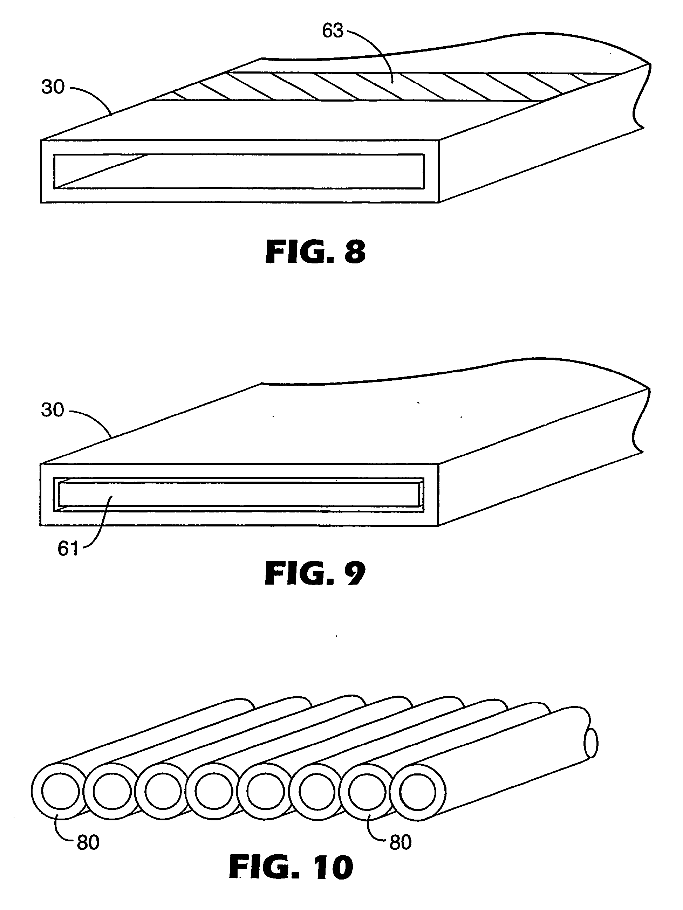

Figures 8-10 illustrate several embodiments of a cooling bladder 30 in accordance with the principles of the present invention. Figures 8 and 9 depict embodiments in which a cooling bladder has the form of a flexible pouch. The cooling bladder 30 illustrated in Figs. 8 and 9 is shown to have a rectangular cross section for simplicity of explanation. The cooling bladder 30 depicted in Fig. 10 comprises a number of flow channels 80, such as a bank of tubes. The flow channels 80 may be of any configuration, and may have circular, rectangular, square or triangular cross sections, for example.

The cooling bladder 30 depicted in Fig. 8 includes a hollowed interior, while the cooling bladder 30 shown in Fig. 9 incorporates a filler 61 within the hollowed interior. In certain applications, the cooling bladder 30 may be subject to tight bends. Excessive bending of the cooling bladder 30 can result in an undesirable decrease in the flow rate of the heat transfer medium within the cooling bladder 30. Increased back pressure caused by such restrictions can be detrimental to the supply apparatus that dispenses the pressurized heat transfer medium to the inlet port of the cooling bladder 30.

In order to reduce the tendency for cooling bladder wall collapse or kinking at tight bend locations, a filler 61 may be incorporated within the cooling bladder 30. The filler 61 is preferably disposed at locations of the cooling bladder 30 which are likely to be subjected to excessive bending. The filler 61 prevents heat transfer medium flow from being interrupted around low radius bends and prevents pinching off of heat transfer medium flow within the cooling bladder 30. Alternatively, the filler 61 may be disposed within the entire length of the cooling bladder 30.

The filler 61 is fabricated from a material that is capable of resisting collapse of the cooling bladder wall when subject to tight bending. In this regard, the filler 61 shown in Fig. 9 provides support to the cooling bladder structure from within the cooling bladder 30. In addition, the filler 61 induces turbulent flow mixing that enhances heat transfer between the cooling bladder 30 and electrochemical cells. The filler 61 is preferably fabricated from a porous material. Suitable filler materials include carbon, metal, plastic, composites, nylon, polyester, Scotch-Brite^{™} (3M, St.Paul, MN) or other nonwoven material.

In another configuration, support for the cooling bladder structure can be provided by an arrangement external to the cooling bladder 30, such as by use of a sleeve 63 of a resilient reinforcing material attached to the exterior surface of the cooling bladder 30, as is shown in Fig. 8. Also, portions of the cooling bladder 30 designed to bend for a given application can be thickened relative to other portions of the cooling bladder 30 as part of cooling bladder fabrication.

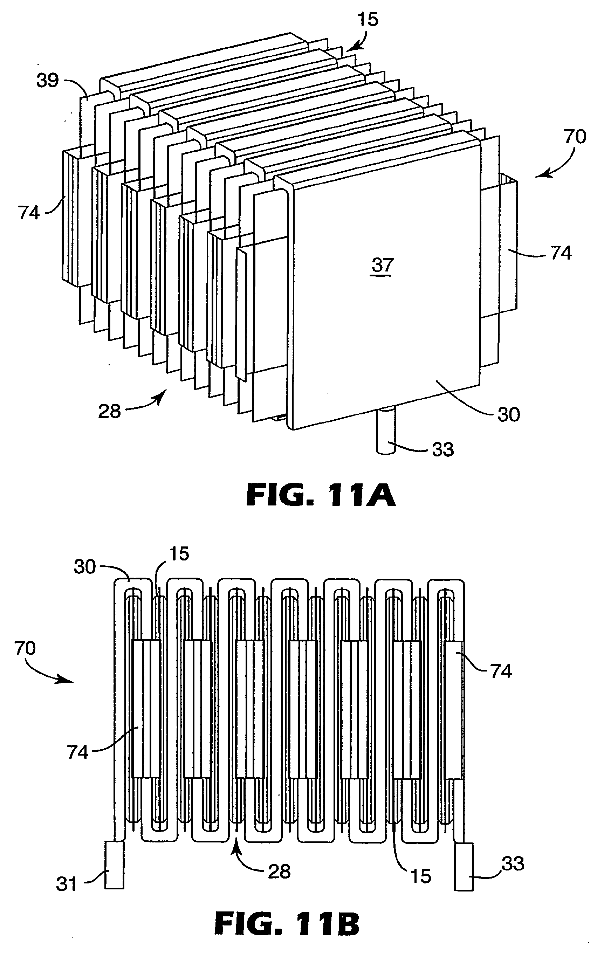

As was discussed previously, the cooling bladder or bladders used within an energy storage device may provide for serial or parallel flows. Figures 11A and 11B illustrate an embodiment in which a cooling bladder 30 is integrated within a cell stack assembly 28 to provide for serial coolant flow through the cooling bladder 30. Figures 11A and 11B show a string of electrochemical cells 15 arranged in a spaced apart relationship to form the cell stack assembly 28. The cooling bladder 30 is assembled in a "fan-folded" fashion such that the active region 37 of the cooling bladder 30 contacts the active heat producing region of the cells 15., As shown, the cooling bladder 30-takes on a serpentine shape when it is installed within the cell stack assembly 28.

When the sub-assembly of the cell stack assembly 28 fitted with the cooling bladder 30 is properly installed within an energy storage module housing, electrical connections between cell tabs 74 and tabs of a circuit board or interconnect board are properly established. The inlet and outlet ports 31, 33 are respectively connected to supply and return lines (not shown) of an external cooling system. During operation, a heat transfer medium passes through the inlet port 31, through the interior compartment of the cooling bladder 30, and passes out to the cooling bladder 30 via the outlet port 33 in a serial manner.

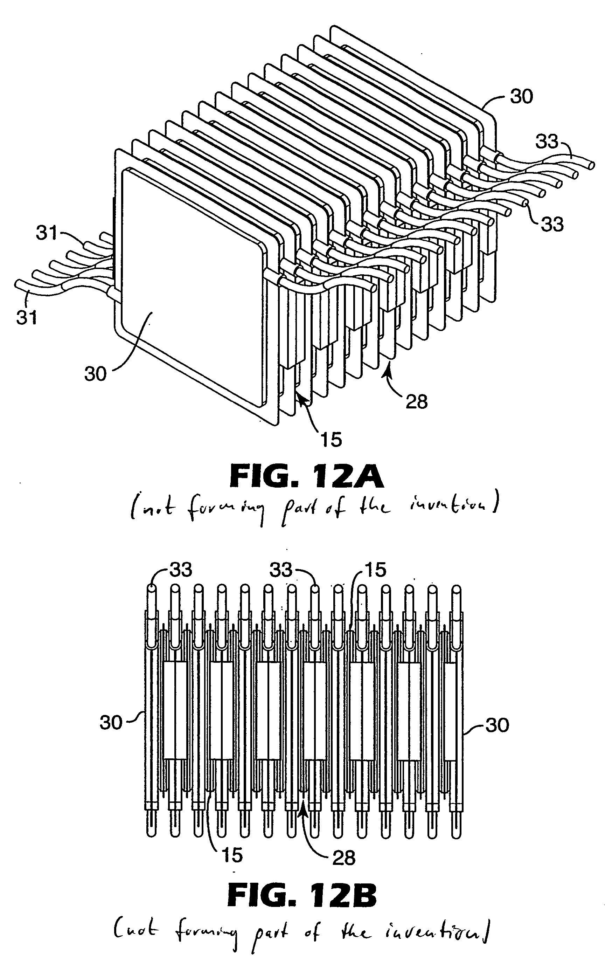

Figures 12A and 12B illustrate an example, which does not form part of the invention and in which cooling bladders 30 are integrated within a cell stack assembly 28 to provide for multiple parallel coolant flow pathways. In the configuration depicted in Figs. 12A and 12B, a number of independent cooling bladders 30 are integrated within the string of electrochemical cells 15 of the cell stack assembly 28. As shown, each electrochemical cell 15 is sandwiched between two independent cooling bladders 30. It is noted that the inlet and outlet ports 31, 33 of the cooling bladders 30 are typically coupled to common supply and return lines of the coolant system for simplicity of design.

A variety of cooling bladder configurations may be achieved to provide optimal temperature control for energy storage systems of varying types. For example, several cooling bladders 30 may be integrated in a serpentine fashion within a single cell stack assembly 28, rather than using a single cooling bladder 30 as shown in Fig. 11. Parallel flows within one or more cooling bladders 30 may be achieved by provision of multiple interior compartments within the cooling bladders 30 and appropriate provision of inlet ports 31 relative to outlet ports 33. For example, the cooling bladders 30 shown in Figs. 11 and 12 may each be fabricated to include multiple interior compartments, such that coolant supplied to an interior compartment via a single inlet port 31 flows into two or more compartments that each terminate with an outlet port 33.

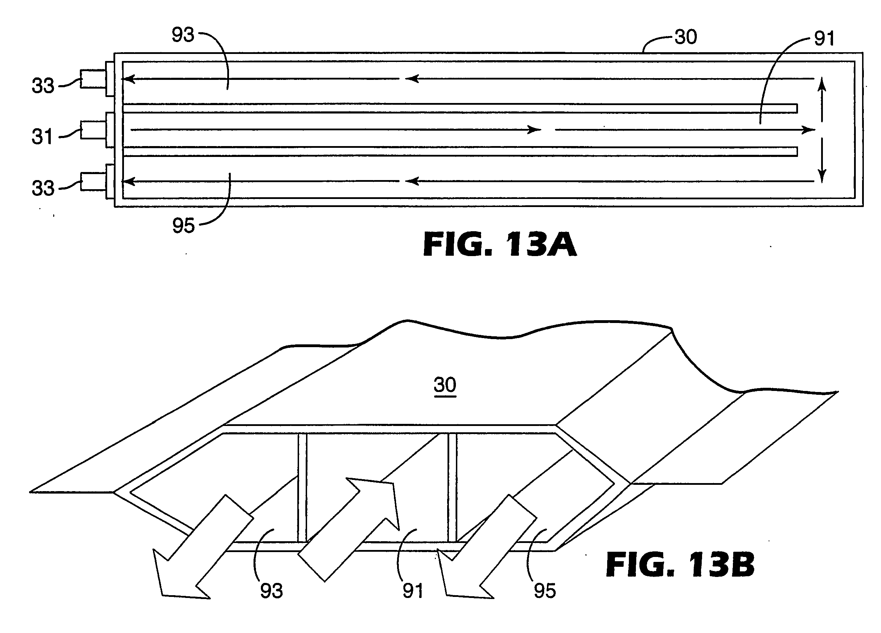

A simple parallel flow arrangement, as illustrated in Figs. 13A and 13B, may, for example, be achieved by provision of one inlet port 31 that supplies coolant to a supply compartment 91 of the cooling bladder 30 so that coolant flows through the supply compartment 91 in one direction. As best seen in Fig. 13B, the cooling bladder 30 is partitioned to include two return compartments 93, 95 that are respectively separated from the supply compartment 91 but fluidly connected to the end of the supply compartment 91 (see Fig. 13A in particular). The ends of each of the two return compartments 93, 95 are fitted with respective outlet ports 33.

A heat transfer medium flows through the supply compartment 91 via the inlet port 31 in a first direction until reaching the end of the supply compartment 91. The heat transfer medium flow is then split into two flows at the location at which the supply compartment 91 fluidly connects with the two return compartments 93, 95. The two flows pass through respective return compartments 93, 95, typically in directions opposite to that of the supply compartment flow, and exit the cooling bladder 30 via respective outlet ports 33. It will be appreciated by those skilled in the art that other flow enhancement features (e.g., adding perforations/apertures to the walls separating the supply and return compartments) may be incorporated into the cooling bladder to further enhance temperature uniformity.

In certain applications, particularly those involving electric or hybrid-electric vehicle, it is important that the cooling apparatus transports heated coolant to the electrochemical cells in a timely manner during cold start situations. For example, the temperature of a given hybrid vehicle battery may be well below a specified operating temperature at the time the operator wishes to initiate vehicle operation. In this situation, it is desirable to bring the battery up to the specified operating temperature as fast as possible. This can be achieved by provision of a cold start electrical heating element that quickly heats the coolant to the required temperature.

This heating element is preferably operative during cold start situations, and may no longer be required once the coolant system comes up to temperature. A flow of quickly warmed coolant is supplied to the cooling bladders 30 of the battery until the battery comes up to the specified operating temperature. During subsequent operation of the vehicle, the heating element may be operated as required to maintain the set temperature.

It is desirable that the duration of time required to bring a battery to a specified operating temperature in a cold start situation be as short as possible. This duration of time can be characterized by a time constant. A time constant is generally defined as the time it takes a given process to reach a steady state condition when starting from an initial startup condition. Within the context of the present invention, the condition is the desired operating temperature, and the time constant is dependent on a number of factors, including ambient air temperature, heating element wattage, coolant type, coolant amount and coolant flow rate, and battery type and battery thermal mass, among other factors. It is preferable to obtain a time constant as low as possible, preferably less than a few minutes.

The foregoing description of the various embodiments of the invention has been presented for the purposes of illustration and description. It is not intended to be exhaustive or to limit the invention to the precise form disclosed. Many modifications and variations are possible in light of the above teaching. For example, a cooling apparatus and methodology of the present invention can readily be adapted to apply to electrochemical cells of a variety of shapes or sizes. It is intended that the scope of the invention be limited not by this detailed description, but rather by the claims appended hereto.

## Claims

1. An electrochemical storage device, comprising:
a plurality of electrochemical cells arranged in a spaced apart relationship, each of the electrochemical cells comprising opposing first and second planar surfaces, first and second side surfaces, and first and second end surfaces, the electrochemical cells subject to volumetric changes during charge and discharge cycling; and
a cooling bladder formed of a conformable thermally conducting material and having an inlet port and an outlet port, the cooling bladder conforming to a serpentine configuration to contact the respective first and second planar surfaces of each of the electrochemical cells and contacting alternating first and second end surfaces of adjacent electrochemical cells during the volumetric changes, a heat transfer medium passing between the inlet and outlet ports to control an operating temperature of the electrochemical cells.

2. The device of claim 1, wherein the cooling bladder is pressurized to maintain the electrochemical cells in a state of compression during cell charge and discharge cycling.

3. The device of claim 1, wherein the cooling bladder comprises a plurality of flow compartments within which the heat transfer medium passes.

4. The device of claim 1, wherein the cooling bladder comprises a first interior compartment and a second interior compartment, the transfer medium passing within the first interior compartment in a direction opposing that of the transfer medium passing within the second interior compartment.

5. The device of claim 1, wherein the plurality of electrochemical cells are arranged to form a cell stack.

6. A method of providing cooling within an electrochemical storage device, comprising:
providing a plurality of electrochemical cells arranged in a spaced apart relationship, each of the electrochemical cells comprising opposing first and second planar surfaces, first and second side surfaces, and first and second end surfaces, the electrochemical cells subject to volumetric changes during charge and discharge cycling;
providing a conformable thermally conductive cooling bladder such that the cooling bladder conforms to a serpentine configuration to contact the respective first and second planar surfaces of each of the electrochemical cells and to contact alternating first and second end surfaces of adjacent electrochemical cells during the volumetric changes; and
passing a heat transfer medium through the cooling bladder to control an operating temperature of the electrochemical cells.

7. The method of claim 6, further comprising pressurizing the cooling bladder to maintain the electrochemical cells in a state of compression during charge and discharge cycling.

8. The method of claim 6, further comprising providing a plurality of the cooling bladders, wherein the plurality of electrochemical cells are arranged to form a plurality of cell sets, each of the cell sets provided with one of a the plurality of the cooling bladders, further wherein passing the heat transfer medium comprises passing the heat transfer medium through each of the cooling bladders to control an operating temperature of the electrochemical cells of each of the cell sets.

9. The method of claim 6, wherein the plurality of electrochemical cells are arranged to form a cell stack.

## Patentansprüche

1. Elektrochemische Speichereinheit, welche Folgendes aufweist:
mehrere elektrochemische Zellen, welche mit Abstand voneinander angeordnet sind, wobei jede der elektrochemischen Zellen gegenüberliegende erste und zweite ebene Flächen, erste und zweite Seitenflächen und erste und zweite Endflächen aufweist und die elektrochemischen Zellen während des Ladungs- und Entladungszyklus Volumenveränderungen unterliegen; und
einen Kühlbalg, welcher aus einem verformbaren wärmeleitenden Material gebildet ist und einen Einlassanschluss und einen Auslassanschluss aufweist, wobei der Kühlbalg sich zu einer schlangenförmigen Anordnung fügt, um die jeweiligen ersten und zweiten ebenen Flächen jeder der elektrochemischen Zellen zu berühren, und während der Volumenveränderungen die abwechselnden ersten und zweiten Endflächen benachbarter elektrochemischer Zellen berührt, wobei ein Wärmeübertragungsmedium zwischen dem Einlass- und dem Auslassanschluss strömt, um die Betriebstemperatur der elektrochemischen Zellen zu steuern.

2. Einheit nach Anspruch 1, wobei der Kühlbalg während des Zellladungs- und -entladungszyklus unter Druck gesetzt wird, um die elektrochemischen Zellen in einem Kompressionszustand zu halten.

3. Einheit nach Anspruch 1, wobei der Kühlbalg mehrere Strömungsabteile aufweist, innerhalb welcher das Wärmeübertragungsmedium strömt.

4. Einheit nach Anspruch 1, wobei der Kühlbalg ein erstes inneres Abteil und ein zweites inneres Abteil aufweist und das Übertragungsmedium innerhalb des ersten inneren Abteils in einer Richtung strömt, welche der des Übertragungsmediums, welches innerhalb des zweiten inneren Abteils strömt, entgegengesetzt ist.

5. Einheit nach Anspruch 1, wobei die mehreren elektrochemischen Zellen derart angeordnet sind, dass sie einen Zellenstapel bilden.

6. Verfahren zum Bereitstellen von Kühlung innerhalb einer elektrochemischen Speichereinheit, welches Folgendes aufweist:
Bereitstellen mehrerer elektrochemischer Zellen, welche mit Abstand voneinander angeordnet sind, wobei jede der elektrochemischen Zellen gegenüberliegende erste und zweite ebene Flächen, erste und zweite Seitenflächen und erste und zweite Endflächen aufweist und die elektrochemischen Zellen während des Ladungs- und Entladungszyklus Volumenveränderungen unterliegen;
Bereitstellen eines verformbaren wärmeleitfähigen Kühlbalgs, derart, dass der Kühlbalg sich zu einer schlangenförmigen Anordnung fügt, um die jeweiligen ersten und zweiten ebenen Flächen jeder der elektrochemischen Zellen zu berühren und während der Volumenveränderungen die abwechselnden ersten und zweiten Endflächen benachbarter elektrochemischer Zellen zu berühren; und
Leiten eines Wärmeübertragungsmediums durch den Kühlbalg, um die Betriebstemperatur der elektrochemischen Zellen zu steuern.

7. Verfahren nach Anspruch 6, welches ferner das Unterdrucksetzen des Kühlbalgs aufweist, um die elektrochemischen Zellen während des Ladungs- und Entladungszyklus in einem Kompressionszustand zu halten.

8. Verfahren nach Anspruch 6, welches ferner das Bereitstellen mehrerer Kühlbälge aufweist, wobei die mehreren elektrochemischen Zellen derart angeordnet sind, dass sie mehrere Zellgruppen bilden, wobei jede der Zellgruppen mit einem der mehreren der Kühlbälge versehen ist, wobei ferner das Leiten des Wärmeübertragungsmediums das Leiten des Wärmeübertragungsmediums durch jeden der Kühlbälge aufweist, um die Betriebstemperatur der elektrochemischen Zellen jeder der Zellgruppen zu steuern.

9. Verfahren nach Anspruch 6, wobei die mehreren elektrochemischen Zellen derart angeordnet sind, dass sie einen Zellenstapel bilden.

## Revendications

1. Dispositif d'accumulation d'énergie électrochimique, qui comprend :
Une pluralité de cellules électrochimiques agencées à distance les unes des autres, chacune des cellules électrochimiques comprenant une première et une deuxième surfaces planes opposées l'une à l'autre, une première et une deuxième surfaces latérales et une première et une deuxième surfaces d'extrémité, les cellules électrochimiques subissant des variations de volume pendant chaque cycle de charge et de décharge et
une enceinte de refroidissement formée en un matériau thermiquement conducteur et déformable et dotée d'un orifice d'entrée et d'un orifice de sortie, l'enceinte de refroidissement prenant une configuration en serpentin de façon à entrer en contact avec la première et la deuxième surfaces planes respectives de chacune des cellules électrochimiques et étant en contact avec la première et la deuxième surfaces d'extrémité alternantes de cellules électrochimiques adjacentes pendant les changements de volume, un fluide de transfert de chaleur circulant entre l'orifice d'entrée et l'orifice de sortie pour contrôler la température de fonctionnement des cellules électrochimiques.

2. Dispositif selon la revendication 1, dans lequel l'enceinte de refroidissement est placée sous pression pour maintenir les cellules électrochimiques dans un état de compression pendant le cycle de charge et de décharge des cellules.

3. Dispositif selon la revendication 1, dans lequel l'enceinte de refroidissement comprend une pluralité de compartiments d'écoulement que traverse le fluide de transfert de chaleur.

4. Dispositif selon la revendication 1, dans lequel l'enceinte de refroidissement comprend un premier compartiment intérieur et un deuxième compartiment intérieur, le fluide de transfert traversant le premier compartiment intérieur dans une direction opposée à celle du passage du fluide de transfert dans le deuxième compartiment intérieur.

5. Dispositif selon la revendication 1, dans lequel la pluralité de cellules électrochimiques est agencée de manière à former une pile de cellules.

6. Procédé de refroidissement d'un dispositif d'accumulation d'énergie électrochimique, ledit procédé comprenant les étapes ci-après :
prévoir une pluralité de cellules électrochimiques agencées à distance l'une de l'autre, chacune des cellules électrochimiques comprenant une première et une deuxième surfaces plans, une première et une deuxième surfaces latérales et une première et une deuxième surfaces d'extrémité, les cellules électrochimiques subissant des changements de volume pendant chaque cycle de charge et de décharge,
prévoir une enceinte de refroidissement thermiquement conductrice et déformable de telle sorte que l'enceinte de refroidissement prenne une configuration en serpentin de façon à entrer en contact avec la première et la deuxième surfaces planes repectives de chacune des cellules électrochimiques et à entrer en contact avec la première et la deuxième surfaces d'extrémité alternantes de cellules électrochimiques adjacentes pendant les changements de volume et
faire passer un fluide de transfert de chaleur à travers l'enceinte de refroidissement de manière à contrôler la température de fonctionnement des cellules électrochimiques.

7. Procédé selon la revendication 6, qui comprend en outre l'étape de placer l'enceinte de refroidissement sous pression de manière à maintenir les cellules électrochimiques dans un état de compression pendant le cycle de charge et de décharge.

8. Procédé selon la revendication 6, qui comprend en outre l'étape de prévoir une pluralité d'enceintes de refroidissement, où la pluralité de cellules électrochimiques est agencée de manière à former une pluralité d'ensembles de cellules, chacun des ensembles de cellules étant doté de l'une de la pluralité d'enceintes de refroidissement, et où en outre l'étape de faire passer le fluide de transfert de chaleur, comprend le passage du fluide de transfert de chaleur à travers chacune des enceintes de refroidissement de manière à contrôler la température de fonctionnement des cellules électrochimiques de chacun des ensembles de cellules.

9. Procédé selon la revendication 6, dans lequel la pluralité de cellules électrochimiques est agencée de manière à former une pile de cellules.
